# EUROPEAN PATENT SPECIFICATION

(11) **EP 1 856 780 B1**
(45) Date of publication and mention of the grant of the patent: **02.05.2012**
(21) Application number: 06736742.5
(22) Date of filing: 02.03.2006
(51) Int. Cl.: H02G 3/04, H02G 3/06

(54) **SURFACE MOUNTED PERIMETER RACEWAY OFFSET ASSEMBLY**
OBERFLÄCHENMONTIERTE PERIMETERKABELKANAL-VERSATZBAUGRUPPE
ENSEMBLE POUR DEPORT DE CANALISATION PERIMETRIQUE MONTEE EN SURFACE

(30) Priority: 07.03.2005 US 74312; 21.04.2005 US 111578
(43) Date of publication of application: 21.11.2007
(73) Proprietor: THE WIREMOLD COMPANY, West Hartford, CT 06110 (US)
(72) Inventor: GALASSO, Marc, Beacon Falls, CT 06403 (US)
(74) Representative: Menges, Rolf
(86) International application number: PCT/US2006/007475
(87) International publication number: WO 2006/096470

(56) References cited:
- GB-A- 2 227 611
- US-A- 5 469 893
- US-A- 5 995 699
- US-B1- 6 642 445
- US-B1- 6 756 539
- US-B1- 6 759 589
- US-B2- 6 344 611
- US-B2- 6 756 544
- US-B2- 6 972 367

## Description

### BACKGROUND OF THE INVENTION

This invention relates generally to a raceway of the type adapted for surface mounting to perimeter walls, and deals more particularly with an offset assembly according to the preamble of claim 1 which allows to accommodate jogs in the wall structure. The preamble of claim 1 is based on the document GB 2 227 611 A. The offset assembly according to the present invention is designed to allow for variations in the dimensions of the wall offset with minimal precision cutting of components during the installation process.

Perimeter surface mounted raceway generally requires the use of internal and external elbow fittings that must be coupled with precision cut raceway base and cover components in order to fabricate, in the field, an offset fitting of appropriate dimension during installation of the raceway around the perimeter of a room or work space.

The document GB 2 227 611 A already mentioned above deals with corner places for cable ducting wherein the cable ducting consists of a channel-shaped base and a covering lid pressed to click-fit thereon by pressure at right angles to the mounting wall. For the sake of appearance as well as security, corners are conventionally effected by moulded corner pieces, of different shapes dependent upon whether an internal corner (i.e. with the walls separated at 90°) or an external corner (i.e. with the walls separated at 270°) is involved. The usual arrangement is to run the ducting to fit just short of the corner, possibly just leaving a gap, and then to finish off the surface gap and the top and bottom regions by pressing, in towards the corner, a suitable polymeric moulding so as generally to continue the line of the ducting and so as to engage with a click fit configuration on the base. Such a corner piece is often difficult to fit, is sometimes insecure when fitted, and in some designs detracts from the continuity of appearance of the ducting. Therefore, the document sets out to provide an improved form of internal or external corner piece. Such corner pieces are constructed as two portions of L-shaped cross-section shaped to click-fit together at various clips when pressure is applied parallel to the wall.

### SUMMARY OF INVENTION

The present invention resides in a perimeter raceway system for a wall structure wherein the wall structure includes generally parallel planar walls that are offset from one another by a generally perpendicular jog in the wall, or other obstruction, that interrupts the installation of linear raceway. The present invention provides internal and external raceway base elbow elements which are of generally L-shape such that one leg of each base elbow is oriented in line with one of the parallel walls to which the raceway is mounted. Each such base elbow element also includes a second leg oriented perpendicular to the one leg. A second leg of at least one elbow element has a length exceeding that of the offset between the parallel wall surfaces, that is uniquely designed so that this second leg can be selectively reduced in length to match the offset of the wall surfaces. A series of relatively simple steps can be accomplished in the field, with a minimum of expenditure of time and effort as compared to that now required with conventional internal and external elbow fittings. The need to fabricate very short conventional raceway runs between standard internal and external elbow fittings is obviated with the unique assembly of this disclosure. Even standard elbow fittings used without any short connector base portion cannot provide the range of offsets possible with the present invention.

The present invention will be described with reference to a novel modular raceway system of the type described in copending U.S. application Serial No. 11/035,477 filed January 13, 2005 entitled "Modular Raceway with Base and Integral Divider", assigned to The Wiremold Company of West Hartford, Connecticut, and published as document US 2006/0151209 A1. However, other styles of raceway can also benefit from an offset fitting assembly constructed in accordance with the present invention. Raceway offset fitting assembly cover components are also provided to complement the particular raceway style and geometry which is being installed. This feature allows the invention to have broader applicability than utilization with the modular raceway of said copending patent application.

### BRIEF DESCRIPTION OF THE DRAWINGS

Fig. 1 shows the various components of an offset fitting constructed in accordance with the present invention, these components being illustrated in exploded relationship to one another.

Fig. 2 illustrates the components of Fig. 1 in assembled condition with parallel raceway runs illustrated in phantom lines for reference purposes, and with parallel but offset wall surfaces W1 and W2.

Fig. 3 is to illustrate the details of a raceway system suitable for the offset assembly shown in Figs. 1 and 2.

Fig. 4 shows the various components of an offset fitting constructed in accordance with an alternative embodiment of the present invention, the various components being illustrated in exploded relationship to one another in a manner similar to that of Fig. 1.

Fig. 5 is a view of the components illustrated in Figure 4 assembled with one another in a form for use by the installer in the field.

### DETAILED DESCRIPTION OF AN EMBODIMENT WHICH IS NOT A PART OF THE PRESENT INVENTION

In the above-mentioned copending patent application a modular raceway system is disclosed having a raceway base that is of T-shape in cross section, and provides a generally flat base plate for mounting to a wall structure. The stem of the T-shape projects forwardly from the wall to provide a divider between separated wireways that accommodate power cables and data/communication cables in isolated relationship to one another, each in its own wireway.

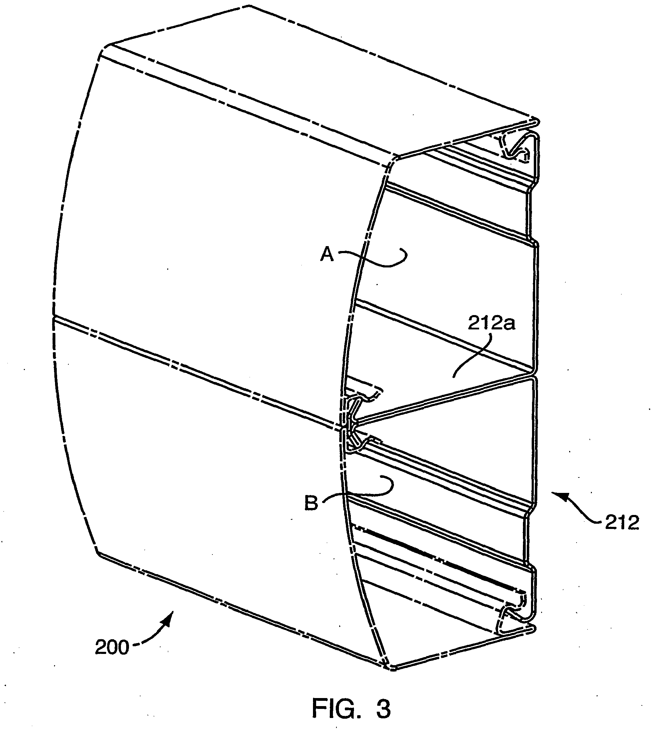

Covers for such a T-shaped raceway base are also disclosed in the aforementioned copending patent application and separately mount to the base. The covers have a generally L-shape cross section and combine with one another to provide a front wall for the overall raceway that has a generally convex configuration. See for example the phantom lines shown in Fig. 3 where such a raceway is illustrated for reference purposes.

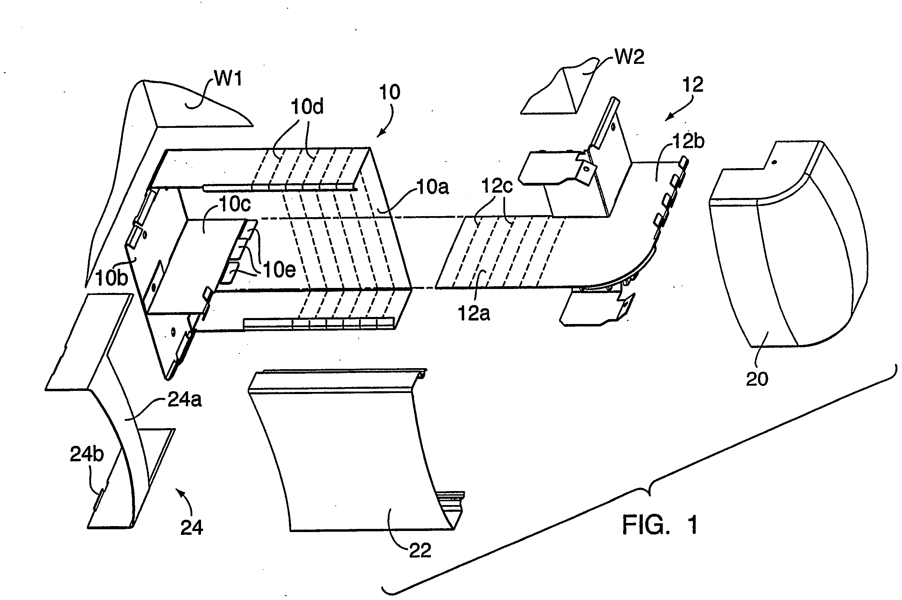

Referring now more particularly to Fig. 1 of the drawings, an internal raceway base elbow element 10 has an overall general L-shape with generally perpendicular legs 10a, 10b, one of which, 10a, is of channel shape cross section. The shorter of the two legs, 10b, is of generally T-shape in cross section. This T-shape is chosen to match the T-shape of the modular raceway base component with which the fitting of Fig. 1 is used (See Fig. 3 and see as well the above-mentioned copending application). Thus, the shorter leg 10b is aligned with the raceway 100, mounted on the wall W1.

Again with reference to Fig. 1, an external raceway base elbow element 12, also of L-shape has mutually perpendicular legs of the L that cooperate to define the external 90° elbow. More particularly, the external elbow element 12 includes a first leg 12b so oriented as to be aligned with the T-shaped raceway base of the modular raceway 200 on the wall surface W2 that is parallel to the wall surface W1 mentioned previously and associated with raceway assembly 100.

Thus, the internal and external raceway base elbow elements 10 and 12 respectively are each of L-shape, and one leg of each L-shape is oriented in line with one of the parallel but spaced raceways 100 and 200 mounted on the parallel but offset walls (W1 and W2). These raceways are of the type described in said co-pending patent application.

Still with reference to Fig. 1 the second leg 12a of the L-shaped external elbow element 12 fits into the channel shaped second leg 10a of the internal base elbow element 10 as suggested by the phantom lines of Fig. 1. The second leg or divider wall 12a of the external raceway base elbow element 12 includes lateral lines of weakening such that the length of this divider wall can be reduced from a predetermined manufactured length by the workman in the field who installs the assembly. Alternatively, this divider portion 12a can be severed on site. So too, the second leg 10a of the internal raceway elbow element 10, although of channel shape, is also provided with lines of weakening so as to allow reductions in its overall length from a nominal manufactured design length. The workman in the field may break away excess portions thereof to match the length of the divider wall 12a to that of the channel leg 10a of elbow element 10, or cut this channel shaped leg to match the offset required during installation.

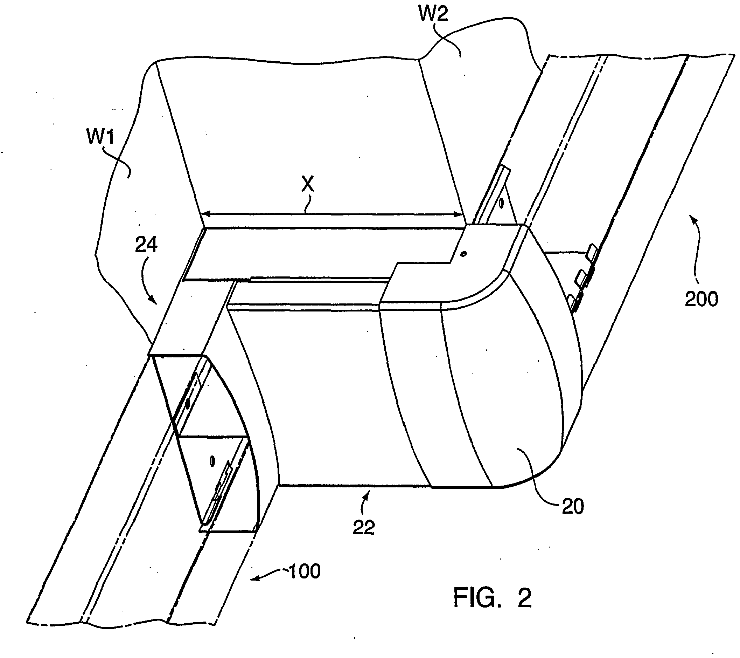

The assembly is shipped in the configuration shown in Fig. 2. The installer can disassemble the assembled unit, and break away or sever portions of the channel shaped second leg 10a of the internal raceway elbow element 10, doing the same with the divider wall 12a of the external raceway base elbow element. Providing a prefabricated offset assembly that avoids the time consuming task of fabricating in the field an offset raceway run between parallel raceway sections on parallel wall surfaces, or around obstructions to the straight raceway runs 100/200.

While the above-described elbow elements serve to efficiently couple one raceway 100 to a second raceway 200, it is also necessary to provide covers for these components that match the raceway system with which it is used. In the first embodiment which is not a part of the present invention, however, it is a feature that the above-described elbow base elements 10, 12 need not actually match the raceway with which they are used, and can be quite readily adapted to accommodate raceways of different geometries.

In accordance with the first embodiment of Figs. 1-3 the offset raceway assembly is preferably intended for use with raceway of the type described in the aforementioned copending patent application. Therefore, an external corner elbow cover 20 is provided to match the external configuration of the raceway cover on the raceway 200, and a C-shaped raceway cover 22 emulates the paired raceway covers of the raceway 200, but is adapted to engage the flanges of the channel shaped base leg 10a of elbow 10. This cover 22 must also be cut to fit the offset dimension for the wall offset itself. The channel shaped leg 10a and divider wall 12a of the internal and external base elements may be cut in a conventional fashion by the installer but the lines of weakening are provided on these elements to make it possible to fit the components in place as a preliminary initial mock-up arrangement.

Assuming that the raceway 100 is identical to the raceway 200 a fitted cover clip 24 is received on the T-shaped base leg 10b of the internal elbow element 10. The arcuate center portion thereof 24a is quite short in longitudinal extent along the direction of raceway 100 so as to serve only as a way of avoiding an arcuate cut in the raceway covers associated with the elongated raceway 100. Tabs 24b on the side portions of the cover clip 24 serves to anchor this cover clip 24 on the wall mounted leg 10b of the internal corner element 10.

To summarize the steps taken in installing the assembly of Fig. 2 once the installer has run the perimeter raceway to the offset wall described above, the installer may follow these general steps:

Take a measurement of the wall offset itself, and select an appropriate line of weakening in both the divider wall 12a and in the channel shaped leg 10a of the elbow elements 12 and 10 respectively to shorten these legs so they correspond to the offset between the walls W1 and W2;

Installing the elbow elements on the offset wall in line with the raceways 100 and 200, followed by :

Installing the external cover 20 and the internal cover clip 24 so that the short cover 22 can be cut to fit between these covers 20 and 24.

Fig. 3 shows a modular raceway of the type described in the aforementioned copending patent application published as document US 2006/0151209 A1. It is with such a raceway that the present invention is specifically designed for use, but it will of course be apparent that other raceways might also be provided with an offset assembly of the invention. While the external covers might be of different configuration to match the covers on the raceway, the offset assembly can nevertheless be as described.

As shown in Fig. 3 divider 212a is provided integrally with the raceway base 212 in the raceway 200. The raceway covers are illustrated in broken lines as separate components defining separate wireways A and B in cooperation with the base 212. Thus, the raceway offset assembly of Fig. 1 includes an integral divider wall 12a in the external corner base element 12, and/or a divider wall shown generally at 10c in the internal corner base element 10. The divider walls in both corner elbow elements are adapted to be aligned with the divider wall 212a in the longitudinally extending raceway 200, and with a divider wall in the equivalent raceway 100 on the other wall. In connection with the internal offset elbow element 10, and more particularly with respect to the longer leg 10a, lines of weakening are indicated generally at 10d in order to accommodate offsets of various dimension (see the reference to this variable indicated as "X" in Fig. 2). Similar lines of weakening 12c are indicated for the longer leg in the external offset base elbow 12. It will be apparent that the overall length of these internal and external element leg portions must be reduced in length to accommodate the offset "X" in the wall to be fitted with this assembly. After breaking away the legs 10a and 12a to the desired offset length "X" it will be apparent that the free edge portion of the divider wall 12a can be fit between tabs 10e that are formed to receive the end portion of leg 12a when these elbow elements are assembled with one another.

It will be apparent also that the shorter leg 12b of the external corner element 12 is adapted to receive the covers of the raceway 200 as suggested in Fig. 2. More particularly, the shorter leg 12b of the external corner elbow 12 receives these covers of the modular raceway of the above-mentioned copending patent application. In the event other raceways are to be accommodated with an offset assembly of the first embodiment this leg 12b of the offset assembly would then be formed to mate with the configuration for the particular raceway base. Thus, the external corner cover member 20 is configured to match the modular raceway of the above-identified copending application. Here again, this component could be configured differently to match raceways of different cover configuration in the event an offset assembly of the first embodiment were used with raceways of more conventional geometry (see for example the current 4000 series raceway manufactured by The Wiremold Company of West Hartford, Connecticut).

The cover clip 24 associated with the shorter leg 10b of the internal corner elbow element 10 is also designed to match a particular raceway. Other configurations for this element 24 can be so formed as to mate with raceways of various cover configurations.

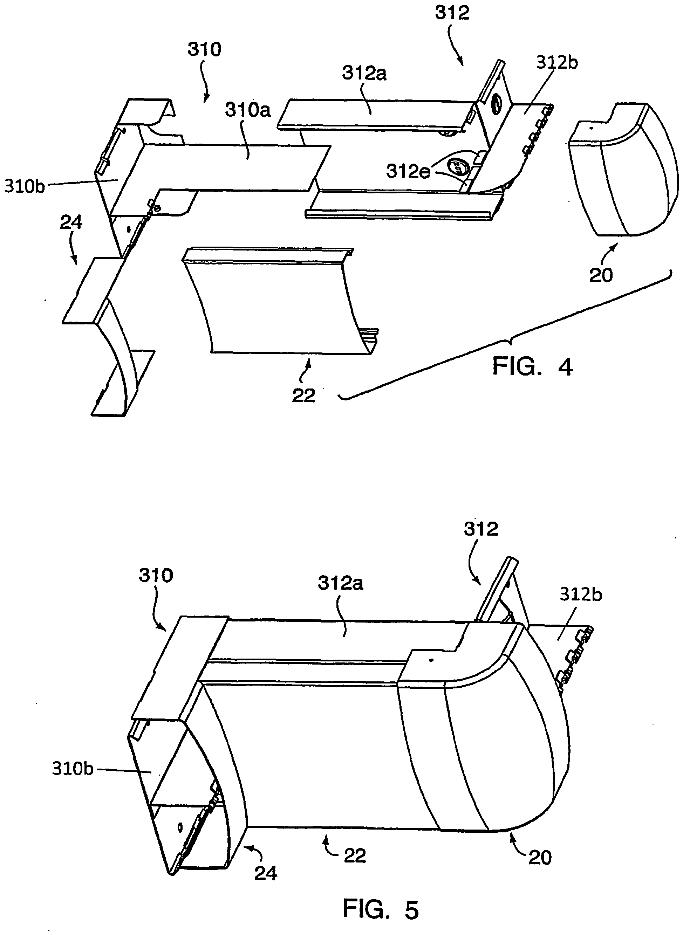

### DETAILED DESCRIPTION OF A PREFERRED EMBODIMENT OF THE PRESENT INVENTION (FIGS. 4-5)

Figures 4 and 5 illustrate a preferred embodiment of the present invention. It is similar to the embodiment of Figures 1-3, especially when seen in assembled condition (compare Fig. 5 and 2, for example).

However, instead of providing the external elbow element 312 with the longer leg or divider wall 12a, the longer leg forms the channel shaped base 312a (corresponding to the channel shaped base of the longer leg of the internal elbow element 10 of the first embodiment).

By the same token, the internal elbow element 310 has its longer leg 310a defining the divider wall (which corresponds to the divider wall 12a of the first embodiment).

While lines of weakening can also be provided in the embodiment of Figs. 4 and 5, the length of time required by the installer to take the preassembled unit of Fig. 5 and to disassemble it so as to be measured for cutting to fit an offset (x) as described above can be reduced sufficiently without these lines of weakening, and therefore the lines of weakening have been found to be an unnecessary element of the present invention. In short, the advantages of the present invention are realized without providing lines of weakening as described previously with reference to the first embodiment.

Thus, it will be apparent that the divider wall 310a of the internal elbow has an end portion that mates with tabs 312e of the external elbow divider for the same reason and purposes as described previously with reference to the first embodiment.

Finally, it is noted that the external cover 20 in Fig. 4 may be identical to that described previously with reference to Figs. 1, 2, and 3, as is the case with the offset race way cover component 22 and a.e. cover clip 24. Thus, the cover components themselves can be chosen to match closely the race way cover components associated with the race way runs 100 and 200 (which may or may not be similar to those described in the above-mentioned copending patent application).

This invention's scope shall be determined by the appended claims, and may be practiced otherwise than as specifically described. For example, two offset assemblies can be used to run raceway around an obstruction offset in an otherwise continuous wall structure.

## Claims

1. An offset assembly for a perimeter raceway system having raceway runs that are offset by a given dimension, said assembly comprising:
an internal and an external elbow base element (310, 312), both said base elements (310, 312) being of L-shape with a first leg (312b) adapted for alignment with a raceway run and a second elbow base element leg (312a),
**characterized in that** the second elbow base element leg (312a) is of length greater than said first leg (312b) and
**in that** said second leg (312a) of at least one of said internal and external elbow base elements (310, 312) has a length exceeding that of the offset, whereby said second leg (312a) can be cut to match that given dimension.

2. The offset assembly of claim 1 wherein one (312) of said internal and external raceway elbow base elements (310, 312) has a second leg (312a) perpendicular to the first leg (312b) thereof, and said second leg (312a) being generally of the same length as said second leg (310a) of said other (310) of said elbow base elements (310, 312) that allows matching said second leg lengths by cutting said second legs (310a, 312a) to match said given dimension.

3. The offset assembly of claim 1 further comprising internal and external base cover elements (20, 22, 24), said cover elements having an external contour that matches the external contour of the raceway runs between which the offset assembly is to be fitted.

4. The offset assembly of claim 1 wherein said elbow base elements (310, 312) having said first leg (312b) oriented in line with the raceways are so configured as to match the cross-sectional configuration of a raceway base provided in said raceways.

5. The offset assembly of claim 3 wherein a first leg (312b) of said elbow base element legs (312a, 312b) has a cross section of T- shape such that an integral divider wall is defined by a web on said first leg (312b), and wherein said external elbow base element (312) is provided with a channel shaped second leg (312a).

6. The offset assembly of claim 5 wherein said second leg (310a) of said internal base element (310) is provided with a web that defines a divider wall extending along said second leg (310a), said second leg (310a) being provided between side walls of said channel shaped second leg (310a) of the external elbow base element (310).

7. The offset assembly of claim 6 wherein said integral divider wall of said-first leg (312b) of said external elbow base element (312) is fitted with offset tabs (312e) to receive a free end portion of the divider wall of said second leg (310a) of said internal elbow base element (310).

## Patentansprüche

1. Versatzbaugruppe für ein Perimeterkabelkanalsystem, das Kabelkanalstrecken hat, die um ein bestimmtes Maß versetzt sind, wobei die Baugruppe umfasst:
ein inneres und ein äußeres Winkelgrundelement (310, 312), wobei beide Grundelemente (310, 312) eine L-Form haben, mit einem ersten Schenkel (312b), der zur Ausrichtung mit einer Kabelkanalstrecke ausgebildet ist, und mit einem zweiten Winkelgrundelementschenkel (312a),
**dadurch gekennzeichnet, dass** der zweite Winkelgrundelementschenkel (312a) eine Länge hat, die größer ist als die des ersten Schenkels (312b), und dass von dem inneren und dem äußeren Winkelgrundelement (310, 312) wenigstens bei einem von diesen der zweite Schenkel (312a) eine Länge hat, die die des Versatzes übersteigt, wodurch der zweite Schenkel (312a) zugeschnitten werden kann, um ihn dem bestimmten Maß anzupassen.

2. Versatzbaugruppe nach Anspruch 1, wobei von dem inneren und dem äußeren Kabelkanalwinkelgrundelement (310, 312) eines (312) eine zweiten Schenkel (312a) rechtwinkelig zu dem ersten Schenkel (312b) desselben hat und wobei der zweite Schenkel (312a) insgesamt dieselbe Länge wie der zweite Schenkel (310a) von dem anderen (310) der Winkelgrundelemente (310, 312) hat, was erlaubt, die Längen des zweiten Schenkels durch Zuschneiden der zweiten Schenkel (310a, 312a) anzupassen, um ihn dem bestimmten Maß anzupassen.

3. Versatzbaugruppe nach Anspruch 1, weiter mit inneren und äußeren Grunddeckelelementen (20, 22, 24), wobei die Deckelelemente eine äußere Kontur haben, die der äußeren Kontur der Kabelkanalstrecken angepasst ist, zwischen die die Versatzbaugruppe einzupassen ist.

4. Versatzbaugruppe nach Anspruch 1, wobei die Winkelgrundelemente (310, 312), bei denen der erste Schenkel (312b) in einer Linie mit den Kabelkanälen ausgerichtet ist, so konfiguriert sind, dass die der Querschnittskonfiguration einer Kabelkanalbasis, die in den Kabelkanälen vorgesehen ist, angepasst ist.

5. Versatzbaugruppe nach Anspruch 3, wobei ein erster Schenkel (312b) der Winkelgrundelementschenkel (312a, 312b) einen Querschnitt von T-Form hat, so dass eine integrale Unterteilungswand durch einen Steg an dem ersten Schenkel (312b) gebildet ist, und wobei das äußere Winkelgrundelement (312) mit einem im Querschnitt U-förmigen zweiten Schenkel (312a) versehen ist.

6. Versatzbaugruppe nach Anspruch 5, wobei der zweite Schenkel (310a) des inneren Grundelements (310) mit einem Steg versehen ist, der eine Unterteilungswand bildet, die sich längs des zweiten Schenkels (310a) erstreckt, wobei der zweite Schenkel (310a) zwischen den Seitenwänden des im Querschnitt U-förmigen zweiten Schenkels (310a) des äußeren Winkelgrundelements (310) vorgesehen ist.

7. Versatzbaugruppe nach Anspruch 6, wobei die integrale Unterteilungswand des ersten Schenkels (312b) des äußeren Winkelbasiselements (312) mit Versatzzungen (312e) versehen ist, um einen freien Endteil der Unterteilungswand des zweiten Schenkels (310a) des inneren Winkelgrundelements (310) zu empfangen.

## Revendications

1. Ensemble de déport pour un système de canalisation périmétrique ayant des passages de canalisation qui sont déportés selon une dimension donnée, ledit ensemble comprenant :
des éléments de base de coude interne et externe (310, 312), lesdits deux éléments de base (310, 312) étant en forme de L avec une première patte (312b) adaptée pour l'alignement avec un passage de canalisation et une deuxième patte d'élément de base de coude (312a),
**caractérisé en ce que** la deuxième patte d'élément de base de coude (312a) a une longueur supérieure à celle de ladite première patte (312b), et
**en ce que** ladite deuxième patte (312a) d'au moins l'un desdits éléments de base de coude interne et externe (310, 312) a une longueur dépassant celle du déport, moyennant quoi ladite deuxième patte (312a) peut être coupée pour correspondre à la dimension donnée.

2. Ensemble de déport selon la revendication 1, dans lequel l'un (312) desdits éléments de base de coude de canalisation interne et externe (310, 312) a une deuxième patte (312a) perpendiculaire à sa première patte (312b), et ladite deuxième patte (312a) ayant généralement la même longueur que ladite deuxième patte (310a) dudit autre (310) desdits éléments de base de coude (310, 312) qui permet de faire correspondre lesdites deuxièmes longueurs de patte en coupant lesdites deuxièmes pattes (310a, 312a) pour correspondre à ladite dimension donnée.

3. Ensemble de déport selon la revendication 1, comprenant en outre des éléments de couvercle de base interne et externe (20, 22, 24), lesdits éléments de couvercle ayant un contour externe qui correspond au contour externe des passages de canalisation entre lesquels l'ensemble de déport doit être monté.

4. Ensemble de déport selon la revendication 1, dans lequel lesdits éléments de base de coude (310, 312) ayant ladite première patte (312b) alignée avec les canalisations sont configurés afin de correspondre à la configuration transversale d'une base de canalisation prévue dans lesdites canalisations.

5. Ensemble de déport selon la revendication 3, dans lequel une première patte (312b) desdites pattes d'élément de base de coude (312a, 312b) a une section transversale en forme de T de sorte qu'une paroi de séparation solidaire est définie par une bande sur ladite première patte (312b), et dans lequel ledit élément de base de coude externe (312) est prévu avec une deuxième patte (312a) en forme de canal.

6. Ensemble de déport selon la revendication 5, dans lequel ladite deuxième patte (310a) dudit élément de base interne (310) est prévue avec une bande qui définit une paroi de séparation s'étendant le long de ladite deuxième patte (310a), ladite deuxième patte (310a) étant prévue entre des parois latérales de ladite deuxième patte (310a) en forme de canal de l'élément de base de coude externe (310).

7. Ensemble de déport selon la revendication 6, dans lequel ladite paroi de séparation solidaire de ladite première patte (312b) dudit élément de base de coude externe (312) est montée avec des languettes de déport (312e) pour recevoir une partie d'extrémité libre de la paroi de séparation de ladite deuxième patte (310a) dudit élément de base de coude interne (310).
